# EUROPÄISCHE PATENTSCHRIFT

(11) **EP 3 719 406 B1**
(45) Veröffentlichungstag und Bekanntmachung des Hinweises auf die Patenterteilung: **18.10.2023**
(21) Anmeldenummer: 20160662.1
(22) Anmeldetag: 03.03.2020
(51) Int. Cl.: F24F 3/16, F24F 7/06, F24F 13/078, F21V 33/00, F21S 8/08, F21S 6/00, F24F 8/10

(54) **STRASSENBELEUCHTUNGSVORRICHTUNG MIT LUFTREINIGUNGSANORDNUNG**
STREET LIGHTING DEVICE WITH AIR CLEANING ARRANGEMENT
APPAREIL D'ÉCLAIRAGE PUBLIC AVEC DISPOSITIF DE PURIFICATION DE L'AIR

(30) Priorität: 03.04.2019 DE 102019108724
(43) Veröffentlichungstag der Anmeldung: 07.10.2020
(73) Patentinhaber: Innogy SE, 45128 Essen (DE)
(72) Erfinder: Sonntag, Andreas, 45721 Haltern am See (DE)
(74) Vertreter: Cohausz & Florack

(56) Entgegenhaltungen:
- CN-A- 104 712 966
- CN-A- 105 674 409
- CN-A- 107 166 318
- CN-A- 108 278 544
- CN-A- 109 488 969
- CN-U- 205 606 379

## Beschreibung

Die Anmeldung betrifft ein Straßenbeleuchtungssystem nach Anspruch 1, umfassend eine Straßenbeleuchtungsvorrichtung mit einem Trägerelement und mindestens einem Beleuchtungsmodul. Darüber hinaus betrifft die Anmeldung ein Verfahren zum Betreiben eines Straßenbeleuchtungssystems nach Anspruch 10.

Heutzutage ist es ein ständiges Ziel, die Luftqualität in öffentlichen als auch in teilöffentlichen Räumen zu verbessern. Hierunter ist insbesondere zu verstehen, die Konzentration von (gesundheitsschädlichen) Schadstoffen in der Luft zu reduzieren. Insbesondere an viel befahrenen Straßen, aber auch in anderen öffentlichen als auch in teilöffentlichen Räumen, beispielsweise an Straßenbahnstationen oder in Bereichen mit einer Vielzahl an Gebäuden mit Kaminöfen, kann es zumindest temporär dazu kommen, dass vorgegebene Grenzwerte von Schadstoffkonzentrationen in der Luft überschritten werden. Beispielhafte und nicht abschließende Schadstoffe sind Feinstaub und Stickoxide, insbesondere Stickstoffdioxid.

So offenbart die Druckschrift CN 104 712 966 A eine Straßenbeleuchtungsvorrichtung mit einem Trägerelement und einem an dem Trägerelement angeordneten Beleuchtungsmodul. Diese Straßenbeleuchtungsvorrichtung kann über einer integrierten Feinstaubfilteranordnung verfügen.

Die Druckschrift CN 205 606 379 U offenbart eine Straßenbeleuchtungsvorrichtung mit einer Luftreinigungsanordnung in Form eines photokatalytischen Filters.

Aus dem Stand der Technik ist es zur Reduzierung der Schadstoffkonzentration in der Luft bekannt, insbesondere den Verkehrsfluss von Kraftfahrzeugen zu steuern, insbesondere zu ändern. So wird versucht, die Luftqualität dadurch zu verbessern, dass in bestimmten geographischen (öffentlichen) Bereichen, wie bestimmten Straßen, bestimmten Straßenabschnitten, bestimmten Stadtvierteln, bestimmten Städten oder ähnlich fest begrenzten geographischen Bereichen, bestimmte Fahrzeugarten, wie Fahrzeuge, die eine vorgegebene Abgasnorm nicht erfüllen, nicht mehr zulässig sind. Ein anderer bekannter Versuch besteht in der Implementierung von so genannten Umweltspuren, bei denen eine Fahrspur einer beispielsweise zweispurigen Straße nur noch von bestimmten Fahrzeugen, wie Busse, Fahrräder, Elektrofahrzeuge etc. verwendet werden darf.

Neben dem Problem, dass die vorgenannten Maßnahmen zu erheblichen Beeinträchtigung der Nutzer von Kraftfahrzeugen führen, ist es zudem auch fraglich, ob diese Maßnahmen tatsächlich einen ausreichenden Effekt auf die Luftqualität haben und die Konzentration von beispielsweise Feinstaub und/oder Stickstoffoxiden, insbesondere Stickstoffdioxid, tatsächlich unterhalb der jeweiligen vorgegebenen Grenzwerte gesenkt werden kann.

Daher liegt der Anmeldung die Aufgabe zugrunde, eine Möglichkeit zur Verbesserung der Luftqualität in öffentlichen und/oder teilöffentlichen Räumen zu schaffen, welche in einfacher Weise umsetzbar ist und insbesondere Beeinträchtigungen von Nutzern reduziert.

Die Aufgabe wird gemäß einem ersten Aspekt der Anmeldung gelöst durch ein Straßenbeleuchtungssystem Anspruch 1.

Indem im Gegensatz zum Stand der Technik eine Luftreinigungsanordnung in eine (ohnehin) in einem öffentlichen und/oder teilöffentlichen Raum vorgesehene Straßenbeleuchtungsvorrichtung integriert ist, wird in einfacher Weise eine Möglichkeit zur Verbesserung der Luft in diesem Raum, insbesondere durch Reinigung der Luft bereitgestellt. Gesundheitsbeeinträchtigungen von Personen durch Luftschadstoffe in der Luft in dem öffentlichen und/oder teilöffentlichen Raum werden zumindest reduziert. Zudem können die Beeinträchtigungen von Nutzern, insbesondere Kraftfahrzeugnutzern, zumindest reduziert werden, indem Fahrverbote für bestimmte Kraftfahrzeuge zumindest in bestimmten geographischen Bereichen aufgehoben und/oder Umweltspuren vermieden werden können.

Erfindungsgemäß ist vorgesehen, dass mindestens eine Luftreinigungsanordnung in einer (öffentlichen oder teilöffentlichen) Straßenbeleuchtungsvorrichtung integriert ist.

Eine erfindungsgemäße Straßenbeleuchtungsvorrichtung ist insbesondere eine (intelligente) Straßenlaterne mit einem Trägerelement, vorzugsweise genau einem Trägerelement, und einem oder mehreren an dem Trägerelement angeordnetes/n Beleuchtungsmodul/e.

Das Trägerelement ist insbesondere stabförmig gebildet. Vorzugsweise kann als Trägerelement ein Mast, insbesondere ein Laternenmast vorgesehen sein. Ein erstes Ende des Trägerelements kann auf einem Fundament angeordnet, insbesondere befestigt sein. Vorzugsweise kann das mindestens eine Beleuchtungsmodul an dem weiteren Ende des Trägerelements angeordnet sein.

Bei dem mindestens einen Beleuchtungsmodul kann es sich vorzugsweise um ein LED-Beleuchtungsmodul handeln. Es versteht sich, dass auch andere Beleuchtungsmodularten vorgesehen sein können. Das Beleuchtungsmodul ist insbesondere eingerichtet, im bestimmungsgemäßen Betrieb (bei Bedarf) die Umgebung der Straßenbeleuchtungsvorrichtung zu beleuchten.

Zur elektrischen Energieversorgung zumindest des Beleuchtungsmoduls kann die Straßenbeleuchtungsvorrichtung über mindestens einen elektrischen Anschluss verfügen, der im bestimmungsgemäßen Betrieb mit einer Energiequelle, insbesondere einem elektrischen Verteilnetz, verbunden sein kann.

Das Trägerelement, insbesondere ein Mast, weist eine umlaufende Außenwand auf, die einen Innenraum bildet bzw. umschließt. Der Innenraum ist insbesondere ein Hohlraum, in dem beispielsweise mindestens eine elektrische Leitung verlaufen kann, um eine elektrische Verbindung zwischen dem genannten elektrischen Anschluss und dem mindestens einen Beleuchtungsmodul bereitzustellen.

Anmeldungsgemäß ist erkannt worden, dass dieser (ohnehin vorhandene) Innenraum ferner vorteilhafter Weise genutzt werden kann, um mindestens eine Luftreinigungsanordnung in das Trägerelement zu integrieren. Hierzu sind erfindungsgemäß in der Außenwand mindestens zwei (voneinander beabstandete) Öffnungen vorgesehen. Eine erste Öffnung kann eine Lufteinlassöffnung sein, um ein Einströmen von zu reinigender Luft in die Luftreinigungsanordnung zu ermöglichen. Eine weitere Öffnung kann eine Luftauslassöffnung sein, um ein Ausströmen von gereinigter Luft aus der Luftreinigungsanordnung zu ermöglichen. Es versteht sich, dass zwei oder mehr Lufteinlassöffnungen und/oder zwei oder mehr Luftauslassöffnungen vorgesehen sein können (beispielsweise für zwei oder mehr (unterschiedliche) Luftreinigungsanordnungen und/oder eine Mehrzahl von Luftkanälen).

Die Luftreinigungsanordnung ist eingerichtet zum Reinigen von einströmender und durch die Luftreinigungsanordnung strömender Luft. Dies meint insbesondere, dass mindestens eine Schadstoffkonzentration in der einströmenden Luft durch die Luftreinigungsanordnung zumindest reduziert wird.

Die mindestens eine Luftreinigungsanordnung weist mindestens einen Luftkanal auf. Der Luftkanal verläuft von der mindestens einen Lufteinlassöffnung zu der mindestens einen Luftauslassöffnung. Anders ausgedrückt ist zwischen der mindestens einen Lufteinlassöffnung und der mindestens einen Luftauslassöffnung eine Fluidverbindung durch den Luftkanal bereitgestellt.

Darüber hinaus weist die mindestens eine Luftreinigungsanordnung mindestens ein Luftreinigungsmodul auf, eingerichtet zum Reinigen der von der Lufteinlassöffnung durch den Luftkanal zu der Luftauslassöffnung strömenden Luft. Das Luftreinigungsmodul kann an und/oder in dem Luftkanal angeordnet sein. Das Luftreinigungsmodul ist eingerichtet, mindestens eine Schadstoffkonzentration in der einströmenden Luft zu reduzieren.

Beispielsweise kann das Luftreinigungsmodul ein Luftfiltermodul sein, eingerichtet zum Filtern der durch den Luftkanal strömenden Luft, eine Bestrahlungseinrichtung sein (z.B. UV-Bestrahlungseinrichtung), eingerichtet zum Bestrahlen der durch den Luftkanal strömenden Luft mit (bestimmten) elektromagnetischen Wellen, eine Ozonbehandlungseinrichtung sein, eingerichtet zum Behandeln der durch den Luftkanal strömenden Luft mit Ozon und/oder eine chemische Reaktionseinrichtung, eingerichtet zum Bewirken einer chemischen Reaktion von mindestens einem bestimmten Bestandteil (insbesondere einem Schadstoff) der durch den Luftkanal strömenden Luft.

Die Implementierung einer Luftreinigungsanordnung in einem Trägerelement einer Straßenbeleuchtungsvorrichtung ist besonders einfach und mit nur einem geringen Aufwand möglich, da einerseits ein ohnehin angeordnetes Trägerelement mit Innenraum verwendet wird und andererseits in einfacher Weise eine Energieversorgung in einer Straßenbeleuchtungsvorrichtung für die Luftreinigungsanordnung bereitgestellt werden kann. Zudem sind Straßenbeleuchtungsvorrichtungen regelmäßig an Straßen und damit in direkter Nähe zu den Schadstoffquellen positioniert, wie Fahrzeugen.

Es versteht sich, dass der Luftkanal beispielsweise aus zwei oder mehr Subkanälen gebildet sein kann. Es versteht sich ferner, dass zwei oder mehr Luftreinigungsmodule (kaskadiert) an und/oder in dem Luftkanal angeordnet sein können.

Gemäß einer ersten Ausführungsform der anmeldungsgemäßen Straßenbeleuchtungsvorrichtung kann die Straßenbeleuchtungsvorrichtung mindestens eine Gebläseeinrichtung umfassen, eingerichtet zum Erzeugen einer Luftströmung von der Lufteinlassöffnung durch den Luftkanal zu der Luftauslassöffnung. Die mindestens eine Gebläseeinrichtung kann beispielsweise in der Lufteinlassöffnung und/oder der Luftauslassöffnung und/oder in dem Luftkanal angeordnet sein. Die Gebläseeinrichtung ist insbesondere ein Sauggebläse, welches beispielsweise von einem Elektromotor angetrieben werden kann. Ein Elektromotor kann über den oben genannten elektrischen Anschluss mit elektrischer Energie versorgt werden. In einfacher Weise kann eine Luftströmung durch die Luftreinigungsanordnung bewirkt werden.

Darüber hinaus kann an bzw. in der Lufteinlassöffnung und/oder der Luftauslassöffnung mindestens ein Vorfilter angeordneten sein, wie ein Fließ und/oder ein Gitter, um ein Eindringen von größeren Objekten, wie Insekten, Staubflocken, Haare, Blätter etc. zu verhindern.

Gemäß einer bevorzugten Ausführungsform der anmeldungsgemäßen Straßenbeleuchtungsvorrichtung kann die mindestens eine Luftreinigungsanordnung eine Feinstaubfilteranordnung sein. Eine Feinstaubfilteranordnung weist insbesondere ein Feinstaubfiltermodul auf, eingerichtet zum Reduzieren der Feinstaubkonzentration der durch den Luftkanal strömenden Luft.

Alternativ oder zusätzlich kann die mindestens eine Luftreinigungsanordnung eine Stickoxidneutralisationsanordnung, insbesondere eine Stickstoffdioxidneutralisationsanordnung, sein. Eine derartige Anordnung kann als Luftreinigungsmodul über einen chemischen Katalysator, beispielsweise über einen SCR-Katalysator (selective catalytic reduction), verfügen. Es versteht sich, dass andere Mittel zur Reduktion der Stickoxide (NOX) eingesetzt werden können.

Gemäß einer besonders bevorzugten Ausführungsform der vorliegenden Straßenbeleuchtungsvorrichtung kann die Feinstaubfilteranordnung als Luftreinigungsmodul mindestens einen Elektroabscheider umfassen, insbesondere einen Plattenelektrofilter. Es versteht sich, dass andere elektrostatische Abscheider eingesetzt werden kann.

Ein Plattenelektrofilter kann insbesondere über mindestens eine (emittierende) Sprühelektrode und mindestens eine flächige Plattenelektrode, auch Abscheiderelektrode genannt, verfügen. Ein Gleichspannungsgenerator kann eingerichtet sein, zum Beaufschlagen der Elektroden mit einer Gleichspannung, insbesondere einer Hochspannung (z.B. zwischen 10kV und 100kV, vorzugsweise zumindest 30kV). Die Abscheiderelektrode kann hierbei beispielsweise geerdet sein.

In einer Ausführungsform kann die Abscheiderelektrode zumindest teilweise die Innenwand des Luftkanals bilden. Auch kann als Abscheiderelektrode mindestens eine am Rand des Luftkanals verlaufende Platte angeordnet sein. Die mindestens eine (emittierende) Sprühelektrode kann beispielsweise in der Achse der Anordnung, insbesondere des Luftkanals, verlaufen. Gelangt nun ein feinstaubelasteter Luftstrom durch die Einlassöffnung in den mit dem Elektroabscheider ausgebildeten Luftkanal, so lagern sich Elektronen, aber auch die positiven Ionen, an den Staubteilchen an und laden diese somit auf. Die auf diese Weise positiv geladenen Staubteilchen wandern zur Sprühelektrode, die negativen Teilchen zur Abscheiderelektrode (zumindest bei einer angelegten Hochspannung mit entsprechender Polarität). Von Zeit zu Zeit kann der Feinstaubniederschlag von den Elektroden entfernt werden, was z.B. durch Klopfen mittels einer Klopfeinrichtung oder durch eine Ultraschallbehandlung durch eine Untraschalleinrichtung erfolgen kann. Die gereinigte Luft kann die Anordnung über die Luftauslassöffnung wieder verlassen. Auch kann innerhalb des Plattenelektrofilters eine Abschabereinrichtung mit einem verfahbaren StaubAbschaber angeodnet sein, der eingerichtet, anhaftende Staubpartikel von der Abscheiderelektrode abzuschaben. Beispielsweise kann die Reinigung z.B. über einen Stellmotor mit Getriebe und verfahrbarer Reinigungsscheibe erfolgen.

Wie bereits beschrieben wurde, kann das Trägerelement ein Mast sein mit einer bestimmten Länge. Bevorzugte Mäste haben eine Länge zwischen 3 m und 15 m, insbesondere zwischen 6 m und 10 m, beispielsweise 7 m. Die Feinstaubfilteranordnung (insbesondere die Elektroden) können sich über zumindest 50 % der Länge des Mastes erstrecken, bevorzugt über zumindest 65 % der Länge des Mastes, insbesondere bevorzugt über zumindest 75 %der Länge des Mastes (und höchsten 85 % der Länge des Mastes). Durch eine entsprechende große Länge kann die Staubabscheidung maximiert und die Feinstaubkonzentration der den Luftkanal durchströmenden Luft besonders wirksam reduziert werden.

Ferner kann der Mastdurchmesser zwischen 100 mm und 300 mm (z.B. ca. 250mm) liegen. Vorzugsweise kann die Innenseite des Mastes die Abscheiderelektrode zumindest teilweise bilden.

Gemäß der Erfindung besitzt die Straßenbeleuchtungsvorrichtung mindestens ein Steuermodul eingerichtet zum Steuern der Luftreinigungsanordnung. Das Steuern der Luftreinigungsanordnung umfasst insbesondere zumindest das Aktivieren und Deaktivieren des Luftreinigungsmoduls (und/oder weiterer Module, wie der mindestens einen Gebläseeinrichtung). Wenn die Luftreinigungsanordnung über unterschiedliche Leistungsstufen verfügt, kann das Steuern zudem das Einstellen einer bestimmten Leistungsstufe umfassen. Beispielweise kann das Steuermodul einen Steuersignaleingang umfassen. Abhängig von einer in einem Steuersignal enthaltenen Steuerinformation (z.B. Aktivierungsbefehl, Deaktivierungsbefehl, Befehl zum Einstellen einer bestimmten Leistungsstufe X etc.) kann dann das Steuermodul die Luftreinigungsanordnung steuern. Hierdurch kann erreicht werden, dass eine Luftreinigungsanordnung nur bei Bedarf, wenn beispielsweise eine Schadstoffkonzentration einen vorgegebenen Grenzwert überschritten hat, aktiviert werden kann.

Gemäß einer bevorzugten Ausführungsform der anmeldungsgemäßen Straßenbeleuchtungsvorrichtung kann die Straßenbeleuchtungsvorrichtung mindestens einen Umweltsensor umfassen, eingerichtet zum Erfassen mindestens eines Luftkonzentrationsparameters. Wie bereits beschrieben wurde, ist mindestens ein (lokales) Steuermodul vorgesehen , eingerichtet zum Steuern der Luftreinigungsanordnung, vorzugsweise basierend auf dem mindestens einen erfassten Luftkonzentrationsparameter (also dem mindestens einen erfassten Parameterwert). Das Steuermodul kann beispielsweise eine Auswerteelement aufweisen, um den erfassten, insbesondere gemessenen mindestens einen Parameterwert auszuwerten. Vorzugsweise kann die Auswertung einen Vergleich mit mindestens einem Grenzwert (der einen zulässigen Konzentrationsbereich und insbesondere einen nicht zulässigen Konzentrationsbereich definieren kann) umfassen. Wird in der Auswertung beispielsweise festgestellt, dass der mindestens eine erfasste Luftkonzentrationsparameterwert (z.B. die Feinstaubkonzentration, Stickoxidkonzentration etc.) in einem (vorgegebenen) nicht zulässigen Bereich liegt, kann eine Aktivierung der Luftreinigungsanordnung erfolgen, wie zuvor beschrieben wurde. Abhängig von der Diskrepanz zwischen dem Grenzwert und dem gemessenen Luftkonzentrationsparameterwert kann zudem beispielsweise eine entsprechende Leistungsstufe eingestellt werden. Wenn der gemessene Luftkonzentrationsparameterwert im zulässigen Bereich liegt, kann eine Deaktivierung erfolgen.

Vorzugweise kann der mindestens eine Umweltsensor ein Feinstaubsensor (z.B. ein optisch basierter Feinstaubsensor oder dergleichen) sein und/oder ein Stickoxidsensor (z.B. ein nach dem amperometrischen Doppelkammerprinzip arbeitender Sensor oder dergleichen) sein, insbesondere ein Stickstoffdioxidsensor. Besonders bevorzugt kann die Straßenbeleuchtungsvorrichtung eine Multifunktions-Straßenbeleuchtungsvorrichtung sein. Neben dem mindestens einen Beleuchtungsmodul und der mindestens einen Luftreinigungsanordnung kann noch mindestens ein weiteres Funktionsmodul vorgesehen sein. Gemäß einer bevorzugten Ausführungsform kann die Straßenbeleuchtungsvorrichtung ferner mindestens ein (Funktions-)Modul umfassen, ausgewählt aus der Gruppe, umfassend:
- ein drahtloses Kommunikationsmodul, eingerichtet zum Ermöglichen einer Kommunikationsverbindung zwischen einem in Reichweite des drahtlosen Kommunikationsmodul befindlichen Nutzerendgeräts und einem (Fernkommunikations-) Netzwerk,
- ein Parkraumüberwachungsmodul, eingerichtet zum Überwachen des im Bereich des Aufstellungsorts der Straßenbeleuchtungsvorrichtung vorhandenen Parkraums,
- ein Displaymodul, eingerichtet zum Anzeigen von Informationen (z.B. über die augenblickliche Luftqualität der Umgebung des Aufstellungsorts der Straßenbeleuchtungsvorrichtung),
- ein Bewegungsstromsensormodul, eingerichtet zum Erfassen von Bewegungsströmen,
- ein Überwachungsmodul, eingerichtet zur optischen Überwachung der Umgebung des Aufstellungsorts der Straßenbeleuchtungsvorrichtung, und
- ein Lademodul, eingerichtet zum elektrischen Laden von Elektrofahrzeugen.

Vorzugsweise können eine Mehrzahl von den vorgenannten Modulen vorgesehen und insbesondere an und/oder in dem Trägerelement angeordnet sein.

Die Straßenbeleuchtungsvorrichtung kann kommunikativ (drahtlos (z.B. Mobilfunknetz) und/oder drahtgebunden (z.B. Glasfasernetz) an ein Netzwerk (z.B. Internet) angeschlossen sein. Um einem (mobilen) Nutzerendgerät, welches sich in der Nähe der Straßenbeleuchtungsvorrichtung befinden, einen Zugang zu dem Netzwerk zur Verfügung zu stellen, kann mindestens ein drahtloses Kommunikationsmodul (WLAN-Modul, Bluetooth-Modul etc.) in der Straßenbeleuchtungsvorrichtung integriert sein. Wenn sich ein Nutzerendgerät (z.B. Smartphone, Laptop, Tablet, Smartwatch, Multimediasystem eines Fahrzeugs etc.) in der Reichweite des drahtlosen Kommunikationsmoduls befindet, kann (ggf. nach vorheriger Authentifizierung des Nutzers) diesem Nutzergerät ein Zugang auf das Netzwerk ermöglicht werden.

Ein Parkraumüberwachungsmodul, beispielsweise umfassend mindestens eine Kamera und eine Bildauswertesoftware, kann dazu dienen, die Verfügbarkeit von Parkraum im Bereich des Aufstellungsorts der Straßenbeleuchtungsvorrichtung zu überwachen, insbesondere zu detektieren. Diese Information kann beispielsweise über das Netzwerk (und ggf. einem Backendsystem und/oder einer IOT-Plattform) anderen Nutzern zur Verfügung gestellt werden.

Ein Displaymodul, wie ein Bildschirm, kann genutzt werden, um Informationen anzuzeigen, wie die augenblicklich an der Straßenbeleuchtungsvorrichtung erfasste Feinstaubkonzentration, Stickoxidkonzentration oder dergleichen. Es versteht sich, dass weitere Informationen anzeigbar sind.

Um Bewegungsströme von Fahrzeugen und/oder Personen zu erfassen und diese Informationen anderen Nutzern beispielsweise über das Netzwerk (und ggf. einem Backendsystem und/oder einer IOT-Plattform) bereitzustellen, kann ein entsprechender (z.B. optischer) Sensor mit einer Auswertesoftware implementiert sein. Aus Sicherheitsgründen kann beispielsweise eine Überwachungskamera an dem Trägerelement befestigt sein.

Vorzugsweise kann ein Lademodul mit mindestens einem Ladepunkt an und/oder in dem Trägerelement angeordnet sein. Der Ladepunkt kann insbesondere eine elektrische Schnittstelle sein, beispielsweise in Form eines fest angeschlagenen Ladekabels mit einem Ladeanschluss (z.B. Ladestecker) und/oder einem Ladenanschluss zum Anschließen eines Ladekabels (z.B. eine Ladesteckeraufnahme, beispielsweise in Form einer Ladesteckerbuchse). Insbesondere kann die Batterie eines Elektrofahrzeugs an dem Lademodul in herkömmlicher Weise geladen werden. Wie zuvor beschrieben wurde, kann über den mindestens einen elektrischen Anschluss eine elektrische Versorgung der oben beschrieben Module in einfacher Weise bereitgestellt werden.

Das erfindungsgemäße Straßenbeleuchtungssystem umfasst mindestens eine zuvor beschriebene Straßenbeleuchtungsvorrichtung. Das Straßenbeleuchtungssystem umfasst mindestens eine zentrale Steuervorrichtung, zumindest eingerichtet zum Steuern der jeweiligen Luftreinigungsanordnungen der zumindest zwei Straßenbeleuchtungsvorrichtungen.

Die zentrale Steuervorrichtung ist in einem entfernt von der mindestens einen Straßenbeleuchtungsvorrichtung angeordneten Backendsystem (z.B. mit einem oder mehreren Server/n) implementiert. Über ein (zuvor beschriebenes

Netzwerk kann eine Datenübertragung zwischen der mindestens einen Straßenbeleuchtungsvorrichtung und der zentrale Steuervorrichtung erfolgen. Vorzugweise können eine Mehrzahl von Straßenbeleuchtungsvorrichtung an die zentrale Steuervorrichtung und von dieser steuerbar sein.

Gemäß der Erfindung weist die zentrale Steuervorrichtung mindestens ein Empfangsmodul auf, eingerichtet zum Empfangen von mindestens einem Umweltsensorsignal eines Umweltsensors, der sich zumindest innerhalb einer vorgebbaren Entfernung zu zumindest einer ersten Straßenbeleuchtungsvorrichtung (von zumindest zwei Straßenbeleuchtungsvorrichtungen befindet). Ferner umfasst die zentrale Steuervorrichtung ein zentrales Steuermodul, eingerichtet zum Steuern zumindest der ersten Straßenbeleuchtungsvorrichtung, basierend auf dem empfangenen Umweltsensorsignal. Das Umweltsensorsignal kann einen Luftkonzentrationsparameterwert enthalten, der von einem zuvor beschriebenen Umweltsensor erfasst wurde. Der Luftkonzentrationsparameterwert kann in zuvor beschriebener Weise durch ein Auswerteelement (des zentralen Steuermoduls) ausgewertet werden (insbesondere kann geprüft werden, ob der erhaltene Luftkonzentrationsparameterwert in einem zulässigen Konzentrationsbereich oder einem nicht zulässigen Konzentrationsbereich liegt).

Insbesondere bei einer Detektion, wonach der Luftkonzentrationsparameterwert in einem nicht zulässigen (vorgegebenen) Konzentrationsbereich liegt, kann das zentrale Steuermodul zumindest die erste Straßenbeleuchtungsvorrichtung derart ansteuern, dass deren Luftreinigungsanordnung (in zuvor beschriebener Weise) aktiviert wird. Beispielsweise kann ein das zentrale Steuermodul bewirken, dass ein Steuersignal an das entsprechende lokale Steuermodul übertragen wird. Erfindungsgemäß werden zwei oder mehr erste Straßenbeleuchtungsvorrichtungen entsprechend aktiviert , die sich in einer vorgebbaren Entfernung bzw. in einem vorgebbaren Umkreise (bzw. geographischen Bereich) insbesondere zu dem Aufstellungsort des Sensors, der den vorgenannten Luftkonzentrationsparameterwert gemessen hat, befinden. Beispielsweise kann die zentrale Steuervorrichtung auf eine Datenbank zugreifen, in der die Standortdaten vorzugsweise sämtlicher Straßenbeleuchtungsvorrichtungen des Systems gespeichert sind. Basierend auf den Standortdaten des mindestens einen Umweltsensors, der einen Luftkonzentrationsparameterwert meldet, der in einem nicht zulässigen Konzentrationsbereich liegt, können sämtliche Straßenbeleuchtungsvorrichtungen, die sich in einer in einer vorgebbaren Entfernung bzw. in einem vorgebbaren Umkreise (bzw. geographischen Bereich) befinden, entsprechend angesteuert, insbesondere aktiviert werden. In entsprechender Weise kann eine Deaktivierung erfolgen. Indem insbesondere eine Mehrzahl von Luftreinigungsanordnungen aktivierbar ist, kann eine relative zeitnahe Reduktion einer bestimmten Schadstoffkonzentration erreicht werden.

Es versteht sich, dass bei anderen Varianten auch Umweltsensorsignale von Sensoren bereitgestellt werden können, die nicht in einer Straßenbeleuchtungsvorrichtung integriert sind.

Ein noch weiterer Aspekt der Anmeldung ist ein Verfahren, Betreiben eines zuvor beschriebenen Straßenbeleuchtungssystems. Das Verfahren umfasst:
- Bereitstellen eines in einem ersten geographischen Bereich durch einen Umweltsensor, der sich zumindest innerhalb einer vorgebbaren Entfernung zu zumindest einer ersten Straßenbeleuchtungsvorrichtung befindet, erfassten Luftkonzentrationsparameters, und
- Steuern, durch ein lokales Steuermodul und/oder ein zentrales Steuermodul, mindestens einer Luftreinigungsanordnung von mindestens einer in dem ersten geographischen Bereichs positionierten (und zuvor beschriebenen) Straßenbeleuchtungsvorrichtung.

Es gibt nun eine Vielzahl von Möglichkeiten, das erfindungsgemäße Straßenbeleuchtungssystem und Verfahren auszugestalten und weiterzuentwickeln.

Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Straßenbeleuchtungsvorrichtung gemäß der vorliegenden Anmeldung,
- Fig. 2: eine schematische Ansicht eines weiteren Ausführungsbeispiels einer Straßenbeleuchtungsvorrichtung gemäß der vorliegenden Anmeldung,
- Fig. 3: eine schematische Ansicht eines Ausführungsbeispiels eines Straßenbeleuchtungssystem gemäß der vorliegenden Anmeldung,
- Fig. 4: ein Diagramm eines Ausführungsbeispiels eines Verfahrens gemäß der vorliegenden Anmeldung, und
- Fig. 5: eine schematische Teilansicht eines weiteren Ausführungsbeispiels einer Straßenbeleuchtungsvorrichtung gemäß der vorliegenden Anmeldung.

Nachfolgend werden für gleiche Elemente gleiche Bezugszeichen verwendet.

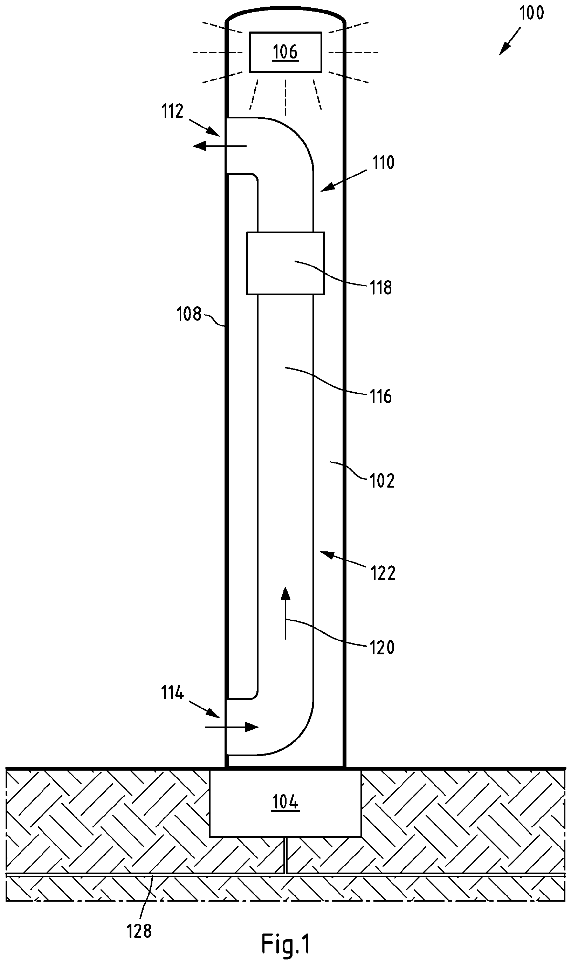

Die Figur 1 zeigt eine schematische Ansicht eines Ausführungsbeispiels einer Straßenbeleuchtungsvorrichtung 100 gemäß der vorliegenden Anmeldung. Die Straßenbeleuchtungsvorrichtung 100, insbesondere eine Straßenlaterne 100, umfasst (genau) ein Trägerelement 102, vorliegend in Form eines Mastes 102, welches auf einem bzw. an einem (im Erdreich installierten) Fundament 104 befestigt ist.

Insbesondere ist ein unteres Ende des rohrförmigen Mastes 102 an dem Fundament 104 befestigt. Im Bereich des oberen Endes des Mastes 102 ist vorliegend ein Beleuchtungsmodul 106, beispielsweise ein LED-Beleuchtungsmodul 106, befestigt, um die Umgebung der Straßenbeleuchtungsvorrichtung 100 zu beleuchten.

Der Mast 102 weist eine Außenwand 108 auf, die einen Innenraum 110 umschließt. Wie zu erkennen ist, ist in dem Innenraum 110 eine Luftreinigungsanordnung 122 intergiert. Die Luftreinigungsanordnung 122 umfasst mindestens einen zwischen mindestens einer in der Außenwand 108 angeordneten Lufteinlassöffnung 114 und mindestens einer in der Außenwand 108 angeordneten Luftauslassöffnung 112 angeordneten bzw. verlaufenden Luftkanal 116. Ferner umfasst die Luftreinigungsanordnung 122 mindestens ein in und/oder an dem Luftkanal 116 angeordnetes Luftreinigungsmodul 118, eingerichtet zum Reinigen der von der Lufteinlassöffnung 114 durch den Luftkanal 116 zu der Luftauslassöffnung 112 strömenden Luft (die Strömungsrichtung der Luft ist durch den Pfeil 120 angedeutet).

Die Luftreinigungsanordnung 122 kann eine Feinstaubfilteranordnung 122 sein mit einem Luftreinigungsmodul 118 eingerichtet zum Reduzieren der Feinstaubkonzentration der durch den Luftkanal 116 strömenden Luft. Hierunter ist insbesondere zu verstehen, dass die Feinstaubkonzentration der Luft im Bereich der Luftauslassöffnung 112 zumindest geringer ist als im Bereich der Lufteinlassöffnung 114. Anders ausgedrückt kann gereinigte Luft über die Luftauslassöffnung 112 abgegeben werden.

Alternativ kann die Luftreinigungsanordnung 122 eine Stickoxidneutralisationsanordnung 122 mit einem Luftreinigungsmodul 118 eingerichtet zum Reduzieren der Stickoxidkonzentration der durch den Luftkanal 116 strömenden Luft. Hierunter ist zu verstehen, dass die Stickoxidkonzentration der Luft im Bereich der Luftauslassöffnung 112 zumindest geringer ist als im Bereich der Lufteinlassöffnung 114. Anders ausgedrückt kann gereinigte Luft über die Luftauslassöffnung 112 abgegeben werden.

Es versteht sich, dass bei anderen Varianten auch zwei Luftreinigungsanordnungen, beispielsweise eine Stickoxidneutralisationsanordnung und eine Feinstaubfilteranordnung angeordnet und/oder eine andere Luftreinigungsanordnung vorgesehen sein können.

Über einen (nicht gezeigten) elektrischen Anschluss kann die Straßenbeleuchtungsvorrichtung 100, insbesondere die elektrischen Verbraucher 106, 118, im bestimmungsgemäß Betrieb an ein elektrisches Verteilnetz 128 angeschlossen sein, um diese mit elektrischer Energie zu versorgen.

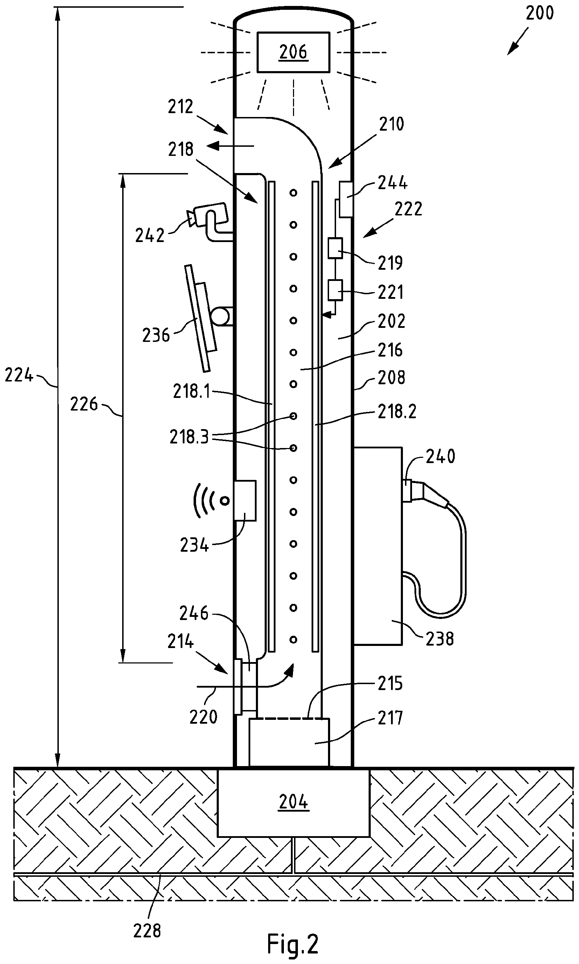

Die Figur 2 zeigt eine schematische Ansicht eines Ausführungsbeispiels einer Straßenbeleuchtungsvorrichtung 200 gemäß der vorliegenden Anmeldung. Nachfolgend werden im Wesentlichen nur die Unterschiede zur der Straßenbeleuchtungsvorrichtung 100 nach Figur 1 erläutert und ansonsten auf die Ausführungen zur Figur 1 verwiesen.

Als Luftreinigungsanordnung 222 ist vorliegend beispielhaft eine Feinstaubfilteranordnung 222 in dem Innenraum 210 der Straßenbeleuchtungsvorrichtung 200 integriert. Durch eine im Bereich der Lufteinlassöffnung 214 angeordnete Gebläseeinrichtung 246 (diese könnte alternativ oder zusätzlich im Bereich der Luftauslassöffnung 212 angeordnet sein), kann eine Luftströmung 220 von der Lufteinlassöffnung 214 durch den Luftkanal 216 zu der Luftauslassöffnung 212 erzeugt werden.

Ferner ist zu erkennen, dass das Luftreinigungsmodul 218 mindestens einen Elektroabscheider 218 umfasst, insbesondere einen Plattenelektrofilter 218. Der Plattenelektrofilter 218 verfügt vorliegend über eine Mehrzahl von (emittierenden) Sprühelektroden 218.3 (die ein gemeinsames Potential aufweisen) und zwei Plattenelektroden 218.1, 218.2, auch Abscheiderelektroden 218.1, 218.2 genannt. Ein Gleichspannungsgenerator 221 kann eingerichtet sein, zum Beaufschlagen der Elektroden 218.1, 218.2, 218.3 mit einer Gleichspannung, insbesondere eine Hochspannung (z.B. zwischen 10kV und 100kV, vorzugsweise zumindest 30kV). Die Abscheiderelektroden 218.1, 218.2 können hierbei beispielsweise geerdet sein.

Gelangt nun ein feinstaubelasteter Luftstrom durch die Lufteinlassöffnung 214 in den mit dem Elektroabscheider 218 ausgebildeten Luftkanal 216, so lagern sich Elektronen, aber auch die positiven Ionen, an den Feinstaubteilchen an und laden diese somit auf. Die auf diese Weise positiv geladenen Feinstaubteilchen wandern zur Sprühelektrode 218.3, die negativen Teilchen zu den Abscheiderelektroden 218.1, 218.2 (bei einer angelegten Hochspannung mit entsprechender Polarität).

Von Zeit zu Zeit kann es erforderlich sein, den Feinstaubniederschlag von den Elektroden 218.1, 218.2, 218.3 zu entferner, was z.B. durch Klopfen mittels einer (nicht gezeigten) Klopfeinrichtung erfolgen kann. Die Feinstaubteilchen können dann durch ein Gitter 215 in eine Feinstaubteilchenaufnahme 217 fallen und dort gesammelt werden und z.B. anschließend geleert werden.

Beispielsweise kann eine entsprechende Feinstaubfilteranordnung in einer Patrone integriert sein, die zwischen die Lufteinlassöffnung und die Luftauslassöffnung positioniert und mit diesen koppelbar ist. In einfacher Weise kann eine Straßenbeleuchtungsvorrichtung 200 mit einer Feinstaubfilteranordnung ausgestattet werden. Anderen Luftreinigungsanordnungen können ebenfalls in einer Patrone integriert sein.

Das Trägerelement 202 ist vorzugsweise ein Mast 202 mit einer bestimmten Länge 224. Bevorzugte Mäste haben eine Länge 224 zwischen 3 m und 15 m, insbesondere zwischen 6 m und 10 m, beispielsweise 7 m. Die Feinstaubfilteranordnung 218 (insbesondere die Elektroden 218.1, 218.2, 218.3) können sich über zumindest 50 % der Länge 224 des Mastes 202 erstrecken, bevorzugt über zumindest 65 % der Länge 224 des Mastes 202, insbesondere bevorzugt über zumindest 75 % der Länge 224 des Mastes 202 (und höchsten 85 % der Länge 224 des Mastes 202). Die Länge der Feinstaubfilteranordnung 218 (insbesondere die Elektroden 218.1, 218.2, 218.3) ist mit dem Bezugszeichen 226 bezeichnet. Durch eine entsprechende große Länge kann die Staubabscheidung maximiert und die Feinstaubkonzentration in der den Luftkanal 216 durchströmenden Luft besonders wirksam reduziert werden.

Die dargestellte Straßenbeleuchtungsvorrichtung 200 umfasst ferner ein lokales Steuermodul 219 und optional einen Umweltsensor 244, insbesondere in Form eines Feinstaubsensors 244.

Der Feinstaubsensor 244 ist eingerichtet, als Luftkonzentrationsparameter die Feinstaubkonzentration in der Umgebungsluft der Straßenbeleuchtungsvorrichtung 200 zu messen. Die gemessenen Feinstaubkonzentrationswerte können insbesondere dem lokalen Steuermodul 219 bereitgestellt werden (bei anderen Ausführungen kann alternativ oder zusätzlich eine Übertragung dieser Werte an eine entfernt angeordnete zentrale Steuervorrichtung und/oder benachbarte Straßenbeleuchtungsvorrichtungen erfolgen).

Das lokale Steuermodul 219 kann eingerichtet sein zum Prüfen, ob die bereitgestellten Feinstaubkonzentrationswerte in einem zulässigen Konzentrationsbereich oder einen nicht zulässigen Konzentrationsbereich liegen (z.B. kann ein entsprechendes (nicht gezeigtes) Auswerteelement vorgesehen sein). Bei einem positiven Prüfungsergebnis, also wenn die gemessenen Feinstaubkonzentrationswerte innerhalb des zulässigen Konzentrationsbereichs liegen, kann eine Ansteuerung der Feinstaubfilteranordnung 222, insbesondere des Gleichspannungsgenerators 221 (und ggf. der Gebläseeinrichtung 246) unterbleiben. Bei einem negativen Prüfungsergebnis, also wenn die Feinstaubkonzentrationswerte innerhalb des unzulässigen Konzentrationsbereichs liegen, kann eine Ansteuerung der Feinstaubfilteranordnung 218, insbesondere des Gleichspannungsgenerators 221 (und ggf. der Gebläseeinrichtung 246) erfolgen. Insbesondere kann der Gleichspannungsgenerator 221 (und ggf. der Gebläseeinrichtung 246) durch das lokale Steuermodul 219 aktiviert werden (vorzugsweise kann z.B. über ein Peer-to-Peer Netzwerk mindestens eine Feinstaubfilteranordnung mindestens einer unmittelbar benachbart angeordneten Straßenbeleuchtungsvorrichtung entsprechend durch das lokale Steuermodul 219 ansteuerbar sein).

Die Feinstaubkonzentration in der Umgebungsluft der Straßenbeleuchtungsvorrichtung 200 kann weiter überwacht werden. Wenn detektiert wird, dass die Feinstaubkonzentrationswerte wieder innerhalb des zulässigen Konzentrationsbereichs liegen, kann eine entsprechende Deaktivierung durch das lokale Steuermodul 219 bewirkt werden.

Darüber hinaus kann, wie bereits beschrieben wurde, das lokale Steuermodul 219 eingerichtet sein, die Aktivierung von Feinstaubfilteranordnungen von (unmittelbar) benachbarten Straßenbeleuchtungsvorrichtungen zu bewirken, die über ein Peer-to-Peer Kommunikationsnetzwerk mit der Straßenbeleuchtungsvorrichtung 200 verbunden sind. Hierdurch kann, insbesondere ohne zentrale Steuervorrichtung, eine Verbesserung der Luftqualität in der Umgebung der Straßenbeleuchtungsvorrichtung 200, die einen nicht zulässigen Luftkonzentrationswert (z.B. Feinstaubkonzentrationswert) detektiert hat, zeitnah erreicht werden.

Darüber hinaus kann die Straßenbeleuchtungsvorrichtung 200 optional über weitere Module 234, 236, 238, 242 verfügen. Beispielsweise kann mindestens ein drahtloses Kommunikationsmodul 234 (z.B. Bluetooth-Modul, WLAN-Modul etc.), ein Display 236, eine Kamera 242, z.B. als Parkraumüberwachungsmodul 242 und/oder Überwachungsmodul 242, und/oder eine Ladestation 238 mit einem Ladepunkt 240 in oder an der Straßenbeleuchtungsvorrichtung 200 intergiert sein. Es versteht sich, dass bei anderen Varianten andere und/oder weitere Module, wie weitere Umweltsensoren, Bewegungsstromsensormodul etc., vorgesehen sein können.

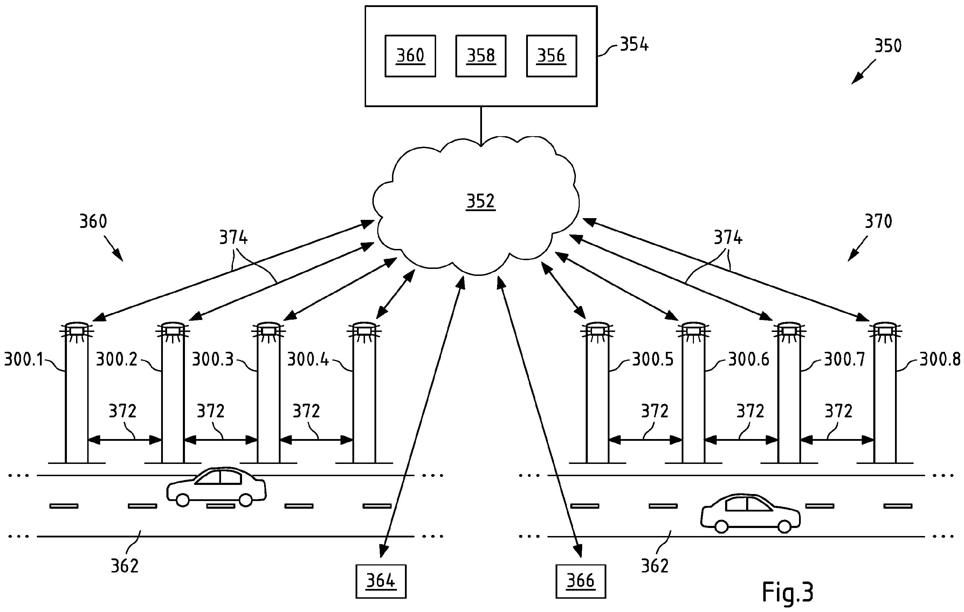

Die Figur 3 zeigt eine schematische Ansicht eines Ausführungsbeispiels eines Straßenbeleuchtungssystems 350 gemäß der vorliegenden Anmeldung. Das dargestellte Straßenbeleuchtungssystem 350 umfasst mindestens eine Straßenbeleuchtungsvorrichtung 300.1 bis 300.8 und mindestens eine zentrale Steuervorrichtung 354, zumindest eingerichtet zum Steuern der mindestens einen Luftreinigungsanordnung der mindestens einen Straßenbeleuchtungsvorrichtung 300.1 bis 300.8. Zu Gunsten einer besseren Übersicht wurden vorliegend keine Details der Straßenbeleuchtungsvorrichtungen 300.1 bis 300.8 dargestellt. Beispielhaft wird nachfolgend davon ausgegangen, dass eine Straßenbeleuchtungsvorrichtung 300.1 bis 300.8 entsprechend dem Ausführungsbeispiel nach Figur 2 gebildet ist.

Wie zu erkennen ist, sind vorliegend eine Vielzahl von Straßenbeleuchtungsvorrichtungen 300.1 bis 300.8 jeweils an einer Straße 362 angeordnet, wobei die Straßenbeleuchtungsvorrichtungen 300.1 bis 300.8 miteinander über ein Peer-to-Peer Netzwerk 372 (oder ein Meshnetzwerk) kommunikativ verbunden sein können.

Zudem sind die Straßenbeleuchtungsvorrichtungen 300.1 bis 300.8 vorliegend an ein Netzwerk 352, wie dem Internet, über Kommunikationsverbindungen 374 anschließbar, um beispielsweise mit der zentralen Steuervorrichtung 354 Daten auszutauschen und/oder beispielsweise sich in der Nähe befindlichen Nutzergeräten über das zuvor beschriebene Kommunikationsmodul einen Zugang zu dem Netzwerk 352 zu ermöglichen.

Die zentrale Steuervorrichtung 354 ist erfindungsgemäß in einem zentralen Backendsystem implementiert, welches beispielsweise über ein oder mehrere (verteilte) Server verfügt. Die zentrale Steuervorrichtung 354 umfasst vorliegend eine Datenbank 356, in der vorzugsweise sämtliche Straßenbeleuchtungsvorrichtungen 300.1 bis 300.8 registriert sind. Neben den jeweiligen eindeutigen Kennungen der Straßenbeleuchtungsvorrichtungen 300.1 bis 300.8 können in der Datenbank die jeweilige Standortdaten und Informationen über die jeweils verbauten Funktionsmodule, wie verbaute Luftreinigungsanordnungen, in der Datenbank 354 gespeichert sein.

Ferner umfasst die zentrale Steuervorrichtung 354 mindestens ein Empfangsmodul 358, eingerichtet zum Empfangen mindestens eines Umweltsensorsignals eines Umweltsensors, der sich zumindest innerhalb einer vorgebbaren Entfernung zu zumindest einer ersten Straßenbeleuchtungsvorrichtung 300.1 bis 300.8 befindet (z.B. in einem ersten geographischen (vorgegebenen) Bereich 360). Beispielsweise kann der Umweltsensor in zuvor beschriebener Weise in einer Straßenbeleuchtungsvorrichtung 300.1 bis 300.8 integriert sein oder ein separater Umweltsensor sein.

Die zentrale Steuervorrichtung 354 umfasst ferner ein zentrales Steuermodul 360, eingerichtet zum Steuern zumindest der ersten Straßenbeleuchtungsvorrichtung 300.1 bis 300.8, basierend auf dem empfangenen Umweltsensorsignal.

Beispielhaft wird nachfolgend davon ausgegangen, dass das Umweltsensorsignal mindestens einen Feinstaubkonzentrationswert umfasst, der von einem sich in einem ersten geographisch beschränkten Bereich 360 (beispielsweise ein bestimmter Straßenabschnitt, ein bestimmte Entfernung zu einem Umweltsensor, ein bestimmtes Stadtviertel etc.) befindet. Neben dem Feinstaubkonzentrationswert kann eine Ortsinformation (z.B. eindeutige Kennung, GPS-Koordinaten oder dergleichen) des Umweltsensors (und/oder der zugeordneten Straßenbeleuchtungsvorrichtung 300.1 bis 300.8) in dem Signal enthalten sein. Es versteht sich, dass die nachfolgenden Ausführungen auf andere Luftkonzentrationsparameter übertragen werden kann.

Nach Erhalt leitet des Umweltsensorsignal kann zumindest der in diesem Signal enthaltende Feinstaubkonzentrationswert durch das Empfangsmodul 358, vorzugweise ein Sende-/Empfangsmodul 358, dem zentralen Steuermodul 360 bereitgestellt werden. Das zentrale Steuermodul 360 kann eingerichtet sein zum Prüfen, ob der mindestens eine bereitgestellte Feinstaubkonzentrationswert in einem zulässigen Konzentrationsbereich oder in einem nicht zulässigen Konzentrationsbereich liegt. Bei einem positiven Prüfungsergebnis, also wenn der mindestens eine Feinstaubkonzentrationswert innerhalb des zulässigen Konzentrationsbereichs liegen, kann eine Ansteuerung der Feinstaubfilteranordnungen bzw. der entsprechenden Straßenbeleuchtungsvorrichtung 300.1 bis 300.4 unterbleiben, insbesondere des jeweiligen lokalen Steuermoduls.

Bei einem negativen Prüfungsergebnis, also wenn der mindestens eine Feinstaubkonzentrationswert innerhalb eines unzulässigen Konzentrationsbereichs lieg, kann eine Ansteuerung der Feinstaubfilteranordnungen bzw. der entsprechenden Straßenbeleuchtungsvorrichtungen 300.1 bis 300.4, insbesondere des jeweiligen lokalen Steuermoduls, erfolgen. Insbesondere kann das zentrale Steuermodul 360, basierend auf den in der Datenbank 356 gespeicherten Daten, eine Aktivierung sämtlicher Feinstaubfilteranordnungen der Straßenbeleuchtungsvorrichtung 300.1 bis 300.4 bewirken, die sich in dem ersten geographisch beschränkten Bereich 360 befinden (Feinstaubfilteranordnungen anderer Straßenbeleuchtungsvorrichtung 300.5 bis 300.8, die sich in einem anderen geographischen Bereich befinden, können deaktiviert bleiben).

Die Feinstaubkonzentration in der Umgebungsluft in dem Bereich 360 kann weiter überwacht werden. Wenn detektiert wird, dass die Feinstaubkonzentrationswerte wieder innerhalb des zulässigen Konzentrationsbereichs liegen, kann eine entsprechende Deaktivierung durch das zentrale Steuermodul 360 bewirkt werden.

Optional kann das zentrale Steuermodul 360 eingerichtet sein, Verkehrslenkeinrichtungen 364, 366 anzusteuern, um in dem jeweiligen Bereich 360, 370 im Bedarfsfall den Straßenverkehr derart zu lenken, dass die Luftqualität in dem entsprechenden Bereich verbessert werden kann. Beispielsweise können durch die Verkehrslenkeinrichtungen 364, 366 einzelne Fahrspuren gesperrt werden oder bestimmten Fahrzeugen das Passieren der entsprechenden Straße 362 untersagt werden.

Vorzugsweise können im öffentlichen Raum oben beschriebene Filtertechnologien und/oder Umweltsensoren flächendeckend in Straßenbeleuchtungsvorrichtungen integriert sein. Zusammen mit bestehenden Sensordaten können die Daten der Umweltsensoren von einer zentralen Steuervorrichtung (z.B. IOT Plattform) ausgewertet und gespeichert werden. Umweltprognosen können auf diesen Daten basierend erstellt werden. Verbaute Filteranlagen bzw. -anordnungen können bei Bedarf aktiviert werden und/oder der Straßenverkehr kann bei Bedarf gelenkt werden, basierend auf diesen Daten.

Es versteht sich, dass bei anderen Varianten der Anmeldung ein Umweltsignal anstelle eines Feinstaubkonzentrationswert auch nur eine Auswerteinformation über einen gemessenen Feinstaubkonzentrationswert umfassen kann.

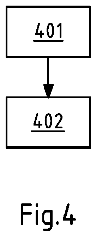

Die Figur 4 zeigt ein Diagramm eines Ausführungsbeispiels eines Verfahrens gemäß der vorliegenden Anmeldung. In einem ersten Schritt 401 kann ein in einem ersten geographischen Bereich erfasster Luftkonzentrationsparameter(wert) bereitgestellt werden. Beispielsweise kann ein Umweltsensor einer zuvor beschriebenen Straßenbeleuchtungsvorrichtung (vgl. z.B. Fig. 2) einem lokalen Steuermodul und/oder einem zentralen Steuermodul den mindestens einen erfassten Luftkonzentrationsparameter(wert) (z.B. ein Mittelwert von einer Mehrzahl von gemessenen Werten) bereitstellen.

In einem nächsten Schritt 402 wird, durch das lokale Steuermodul und/oder das zentrale Steuermodul, mindestens eine Luftreinigungsanordnung von mindestens einer sich in dem ersten geographischen Bereichs positionierten Straßenbeleuchtungsvorrichtung gesteuert, insbesondere aktiviert oder deaktiviert. Dies kann insbesondere von einer zuvor beschriebenen Auswertung/Prüfung des mindestens einen bereitgestellten Luftkonzentrationsparameterwerts abhängen. Dann kann mit Schritt 401 das Verfahren fortgesetzt werden.

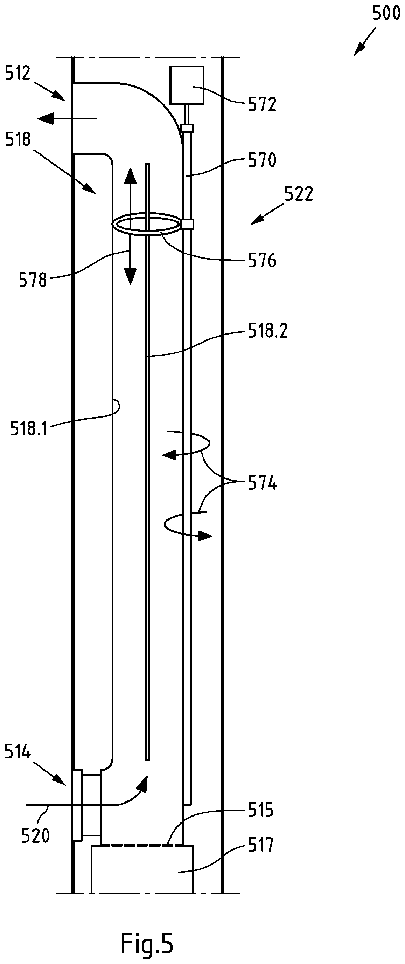

Die Figur 5 zeigt eine schematische Teilansicht eines weiteren Ausführungsbeispiels einer Straßenbeleuchtungsvorrichtung 500 gemäß der vorliegenden Anmeldung. Zur Vemeidung werden nachfolgend im Wesentlichen nur die Unterschiede zu dem Ausführungsbeispiel nach Figur 2 erläutert.

Wie zu erkennen ist, weist die Feinstaubfilteranordnung 522 einen Elektroabscheider 518 auf, der aus einer umlaufenden Abscheiderelektrode 518.1 (insbesondere eine Kathode 518.1) und eine in der Achsenmitte positionierte weitere Elektrode 518.2 (insbesondere eine Anode 518.2) auf. Um den Feinstaubniederschlagvon den Elektroden 518.1, 518.2, insbesondere der Kathode 518.1 zu entfernen, ist vorliegend eine Abschabereinrichtung angeordnet.

Die Abschabervorrichtung umfasst einen (elektrisch betriebenen) Stellmotor 572 mit einer Welle 570 und einem an der Welle 570 befestigten Staubabschaber 576, dessen radial nach außen weisende Fläche die Innenseite der Kathode 518.1 kontaktieren kann. Durch Drehen (angedeutet durch den Pfeil 574) der Welle 570 (angetrieben von dem Stellmotor 572) kann der Staubabschaber 576 in vertikaler Richtung 578 verfahren werden. Hierdruch können anhaftende Stabpartikel abgeschabt und in die Feinstaubteilchenaufnahme 517 geführt werden.

Die Kathode 518.1 kann beispielesweise durch eine leitende (und geerdete) Innenwand der Straßenbeleuchtungsvorrichtung 500 oder durch ein eingesetztes (und geerdetes) Innenrohr gebildet sein.

## Patentansprüche

1. Straßenbeleuchtungssystem (350), umfassend mindestens eine Straßenbeleuchtungsvorrichtung (100, 200, 300.1. bis 300.8, 500), umfassend:
- mindestens ein Trägerelement (102, 202),
- mindestens ein an dem Trägerelement (102, 202) angeordnetes Beleuchtungsmodul (106, 206),
- wobei das Trägerelement (102, 202) mindestens eine einen Innenraum (110, 210) umschließende Außenwand (108, 208) umfasst,
- wobei die Außenwand (108, 208) mindestens eine Lufteinlassöffnung (114, 214, 514) und mindestens eine Luftauslassöffnung (112, 212, 512) umfasst, und
- mindestens eine in dem Innenraum (110, 210) angeordnete Luftreinigungsanordnung (122, 222, 522),
- wobei die Luftreinigungsanordnung (122, 222, 522) umfasst:
- mindestens einen zwischen der Lufteinlassöffnung (114, 214, 514) und der Luftauslassöffnung (112, 212, 512) angeordneten Luftkanal (116, 216), und
- mindestens ein in und/oder an dem Luftkanal (116, 216) angeordnetes Luftreinigungsmodul (118, 218, 518), eingerichtet zum Reinigen der von der Lufteinlassöffnung (114, 214, 514) durch den Luftkanal (116, 216) zu der Luftauslassöffnung (112, 212, 512) strömenden Luft,
- ein lokales Steuermodul (219);
- wobei das Straßenbeleuchtungssystem (350) ferner umfasst:
- mindestens eine zentrale Steuervorrichtung (354), zumindest eingerichtet zum Steuern der mindestens einen Luftreinigungsanordnungen (122, 222, 522) der mindestens einen Straßenbeleuchtungsvorrichtung (100, 200, 300.1. bis 300.8, 500), wobei die zentrale Steuervorrichtung in einem entfernt von der mindestens einen Straßenbeleuchtungsvorrichtung angeordneten Backendsystem implementiert ist,
- wobei die zentrale Steuervorrichtung (354) mindestens ein Empfangsmodul (358) aufweist, eingerichtet zum Empfangen mindestens eines Umweltsensorsignals eines Umweltsensors (244), der sich zumindest innerhalb einer vorgebbaren Entfernung zu zumindest einer ersten Straßenbeleuchtungsvorrichtung (100, 200, 300.1. bis 300.8, 500) befindet, und
- die zentrale Steuervorrichtung (354) mindestens ein zentrales Steuermodul (360) umfasst, eingerichtet zum Steuern zumindest der ersten Straßenbeleuchtungsvorrichtung (100, 200, 300.1. bis 300.8, 500), basierend auf dem empfangenen Umweltsensorsignal, und
- wobei das zentrale Steuermodul (360) eingerichtet ist, zwei oder mehr erste Straßenbeleuchtungsvorrichtungen, durch Übertragen eines Steuersignals an das entsprechende lokale Steuermodul (219), zu aktivieren, die sich in einer vorgebbaren Entfernung zu dem Aufstellungsort des Umweltsensors befinden, der den Luftkonzentrationsparameterwert gemessen hat.

2. Straßenbeleuchtungssystem (350) nach Anspruch 1, **dadurch gekennzeichnet, dass**
- die Straßenbeleuchtungsvorrichtung (100, 200, 300.1. bis 300.8, 500) mindestens eine Gebläseeinrichtung (246) umfasst, eingerichtet zum Erzeugen einer Luftströmung (120, 220) von der Lufteinlassöffnung (114, 214, 514) durch den Luftkanal (116, 216) zu der Luftauslassöffnung (112, 212, 512).

3. Straßenbeleuchtungssystem (350) nach Anspruch 1 oder 2, **dadurch gekennzeichnet, dass**
- die mindestens eine Luftreinigungsanordnung (122, 222, 522) eine Feinstaubfilteranordnung (122, 222, 522) ist,
und/oder
- die mindestens eine Luftreinigungsanordnung (122, 222, 522) eine Stickoxidneutralisationsanordnung (122) ist..

4. Straßenbeleuchtungssystem (350) nach Anspruch 3, **dadurch gekennzeichnet, dass**
- die Feinstaubfilteranordnung (122, 222, 522) als Luftreinigungsmodul (118, 218, 518) mindestens einen Elektroabscheider (118, 218, 518) umfasst, insbesondere einen Plattenelektrofilter (118, 218, 518).

5. Straßenbeleuchtungssystem (350) nach Anspruch 3 oder 4, **dadurch gekennzeichnet, dass**
- das Trägerelement (102, 202) ein Mast (102, 202) mit einer bestimmten Länge (224) ist,
- wobei sich die Feinstaubfilteranordnung (122, 222, 522) über zumindest 50 % der Länge (224) des Mastes (102, 202) erstreckt, bevorzugt über zumindest 65 % der Länge (224) des Mastes (102, 202), insbesondere bevorzugt über zumindest 75 %der Länge (224) des Mastes (102, 202).

6. Straßenbeleuchtungssystem (350) nach einem der vorherigen Ansprüche, **dadurch gekennzeichnet, dass**
- die Straßenbeleuchtungsvorrichtung (100, 200, 300.1. bis 300.8, 500) mindestens einen Umweltsensor (244) umfasst, eingerichtet zum Erfassen mindestens eines Luftkonzentrationsparameters, und
- mindestens ein lokales Steuermodul (219) der Straßenbeleuchtungsvorrichtung (100, 200, 300.1. bis 300.8, 500) zum Steuern der Luftreinigungsanordnung (122, 222, 522), basierend auf dem mindestens einen erfassten Luftkonzentrationsparameter, eingerichtet ist,
- wobei der mindestens eine Umweltsensor (244) insbesondere ein Feinstaubsensor (244) und/oder ein Stickstoffdioxidsensor (244) ist.

7. Straßenbeleuchtungssystem (350) nach einem der vorherigen Ansprüche, **dadurch gekennzeichnet, dass**
- die Straßenbeleuchtungsvorrichtung (100, 200, 300.1. bis 300.8, 500) ferner mindestens ein Modul umfasst, ausgewählt aus der Gruppe, umfassend:
- ein drahtloses Kommunikationsmodul (234), eingerichtet zum Ermöglichen einer Kommunikationsverbindung zwischen einem in Reichweite des drahtlosen Kommunikationsmodul (234) befindlichen Nutzerendgeräts und einem Netzwerk (352),
- ein Displaymodul (236), eingerichtet zum Anzeigen von Informationen,
- ein Bewegungsstromsensormodul, eingerichtet zum Erfassen von Bewegungsströmen,
- ein Überwachungsmodul (242), eingerichtet zur optischen Überwachung der Umgebung des Aufstellungsorts der Straßenbeleuchtungsvorrichtung (100, 200, 300.1. bis 300.8, 500).

8. Straßenbeleuchtungssystem (350) nach einem der vorherigen Ansprüche, **dadurch gekennzeichnet, dass**
- die Straßenbeleuchtungsvorrichtung (100, 200, 300.1. bis 300.8, 500) ferner ein Lademodul (238) umfasst, eingerichtet zum Laden von Elektrofahrzeugen.

9. Straßenbeleuchtungssystem (350) nach einem der vorherigen Ansprüche, **dadurch gekennzeichnet, dass**
- die Straßenbeleuchtungsvorrichtung (100, 200, 300.1. bis 300.8, 500) ferner ein Parkraumüberwachungsmodul (242) umfasst, eingerichtet zum Überwachen des im Bereich des Aufstellungsorts der Straßenbeleuchtungsvorrichtung (100, 200, 300.1. bis 300.8, 500) vorhandenen Parkraums.

10. Verfahren zum Betreiben eines Straßenbeleuchtungssystems (350) nach einem der vorherigen Ansprüche, umfassend:
- Bereitstellen eines in einem ersten geographischen Bereich (360, 370) durch einen Umweltsensor (244), der sich zumindest innerhalb einer vorgebbaren Entfernung zu zumindest einer ersten Straßenbeleuchtungsvorrichtung (100, 200, 300.1. bis 300.8, 500) befindet, erfassten Luftkonzentrationsparameters, und
- Steuern, durch ein lokales Steuermodul und/oder ein zentrales Steuermodul, mindestens einer Luftreinigungsanordnung (122, 222, 522) von mindestens einer sich in dem ersten geographischen Bereich (360, 370) positionierten Straßenbeleuchtungsvorrichtung (100, 200, 300.1. bis 300.8, 500).

## Claims

1. Street lighting system (350) comprising at least one street lighting device (100, 200, 300.1. to 300.8, 500) comprising:
- at least one support element (102, 202),
- at least one lighting module (106, 206) arranged at the support element (102, 202),
- wherein the support element (102, 202) comprises at least one outer wall (108, 208) enclosing an interior space (110, 210),
- wherein the outer wall (108, 208) comprises at least one air inlet opening (114, 214, 514) and at least one air outlet opening (112, 212, 512), and
- at least one air purification arrangement (122, 222, 522) arranged in the interior space (110, 210),
- said air purification arrangement (122, 222, 522) comprising:
- at least one air duct (116, 216) arranged between the air inlet opening (114, 214, 514) and the air outlet opening (112, 212, 512); and
- at least one air purification module (118, 218, 518) arranged in and/or at the air duct (116, 216), wherein the air purification module is configured to purify the air flowing from the air inlet opening (114, 214, 514) through the air duct (116, 216) to the air outlet opening (112, 212, 512),
- a local control module (219).
- wherein the street lighting system (350) further comprises:
- at least one central control device (354) at least configured to control the at least one air purification arrangements (122, 222, 522) of the at least one street lighting device (100, 200, 300.1. to 300.8, 500), wherein the central control device is implemented in a backend system remotely located from the at least one street lighting device,
- wherein the central control device (354) comprises at least one receiving module (358) configured to receive at least one environmental sensor signal from an environmental sensor (244) located at least within a predefinable distance of at least one first street lighting device (100, 200, 300.1. to 300.8, 500), and
- the central control device (354) comprises at least one central control module (360) configured to control at least the first street lighting device (100, 200, 300.1. to 300.8, 500) based on the received environmental sensor signal, and
- wherein the central control module (360) is configured to activate two or more first street lighting devices, by transmitting a control signal to the corresponding local control module (219), which are located at a predeterminable distance from the installation location of the environmental sensor that measured the air concentration parameter value.

2. Street lighting system (350) according to claim 1, **characterized in that**
- the street lighting device (100, 200, 300.1. to 300.8, 500) comprises at least one blower equipment (246) configured to generate an air flow (120, 220) from the air inlet opening (114, 214, 514) through the air duct (116, 216) to the air outlet opening (112, 212, 512).

3. Street lighting system (350) according to claim 1 or 2, **characterized in that**
- the at least one air purification arrangement (122, 222, 522) is a fine dust filter arrangement (122, 222, 522),
and/or
- the at least one air purification arrangement (122, 222, 522) is a nitrogen oxide neutralization arrangement (122).

4. Street lighting system (350) according to claim 3, **characterized in that**
- the fine dust filter arrangement (122, 222, 522) comprises at least one electrostatic precipitator (118, 218, 518) as an air purification module (118, 218, 518), in particular a plate electrostatic precipitator (118, 218, 518).

5. Street lighting system (350) according to claim 3 or 4, **characterized in that**
- the support element (102, 202) is a mast (102, 202) having a certain length (224),
- wherein the fine dust filter arrangement (122, 222, 522) extends over at least 50 % of the length (224) of the mast (102, 202), preferably over at least 65 % of the length (224) of the mast (102, 202), in particular preferably over at least 75 % of the length (224) of the mast (102, 202).

6. Street lighting system (350) according to any of the previous claims, **characterized in that**
- the street lighting device (100, 200, 300.1. to 300.8, 500) comprises at least one environmental sensor (244) configured to detect at least one air concentration parameter, and
- at least one local control module (219) of the street lighting device (100, 200, 300.1. to 300.8, 500) for controlling the air purification arrangement (122, 222, 522) based on the at least one detected air concentration parameter,
- wherein the at least one environmental sensor (244) is in particular a fine dust sensor (244) and/or a nitrogen dioxide sensor (244).

7. Street lighting system (350) according to any one of the preceding claims, **characterized in that**
- the street lighting device (100, 200, 300.1. to 300.8, 500) further comprises at least one module selected from the group comprising:
- a wireless communication module (234) configured to enable a communication link between a user terminal located within range of the wireless communication module (234) and a network (352),
- a display module (236) configured to display information,
- a motion current sensor module configured to detect motion currents,
- a monitoring module (242) configured to visually monitor the environment of the installation site of the street lighting device (100, 200, 300.1. to 300.8, 500).

8. Street lighting system (350) according to any one of the preceding claims, **characterized in that**
- the street lighting device (100, 200, 300.1. to 300.8, 500) further comprises a charging module (238) configured to charge electric vehicles.

9. Street lighting system (350) according to any one of the preceding claims, **characterized in that**
- the street lighting device (100, 200, 300.1. to 300.8, 500) further comprises a parking space monitoring module (242) configured to monitor the parking space present in the area of the installation site of the street lighting device (100, 200, 300.1. to 300.8, 500).

10. Method of operating a street lighting system (350) according to any one of the preceding claims, comprising:
- providing an air concentration parameter sensed in a first geographic area (360, 370) by an environmental sensor (244) located at least within a predeterminable distance from at least one first street lighting device (100, 200, 300.1. to 300.8, 500), and
- controlling, by a local control module and/or a central control module, at least one air purification arrangement (122, 222, 522) of at least one street lighting device (100, 200, 300.1. to 300.8, 500) positioned in the first geographic area (360, 370).

## Revendications

1. Système d'éclairage public (350) comprenant au moins un dispositif d'éclairage public (100, 200, 300.1. à 300.8, 500) comprenant :
- au moins un élément de support (102, 202),
- au moins un module d'éclairage (106, 206) disposé sur l'élément de support (102, 202),
- où l'élément de support (102, 202) comprend au moins une paroi extérieure (108, 208) entourant un espace intérieur (110, 210),
- où la paroi extérieure (108, 208) comprend au moins une ouverture d'entrée d'air (114, 214, 514) et au moins une ouverture de sortie d'air (112, 212, 512), et
- au moins un ensemble de purification d'air (122, 222, 522) disposé dans l'espace intérieur (110, 210),
- où l'ensemble de purification d'air (122, 222, 522) comprenant :
- au moins un canal d'air (116, 216) disposé entre l'ouverture d'entrée d'air (114, 214, 514) et l'ouverture de sortie d'air (112, 212, 512), et
- au moins un module de purification d'air (118, 218, 518) disposé dans et/ou sur le canal d'air (116, 216), configuré pour purifier l'air s'écoulant de l'ouverture d'entrée d'air (114, 214, 514) à travers le canal d'air (116, 216) vers l'ouverture de sortie d'air (112, 212, 512),
- un module de commande local (219) ;
- où le système d'éclairage public (350) comprend en outre :
- au moins un dispositif de commande central (354), au moins configuré pour commander l'au moins un ensemble de purification d'air (122, 222, 522) du au moins un dispositif d'éclairage public (100, 200, 300.1. à 300.8, 500), où le dispositif de commande central est implémenté dans un système de backend situé à distance de l'au moins un dispositif d'éclairage public,
- où le dispositif de commande central (354) a au moins un module de réception (358), configuré pour recevoir au moins un signal de capteur d'environnement d'un capteur d'environnement (244), qui se trouve au moins à dans une distance prédéfinissable par rapport à au moins un premier dispositif d'éclairage public (100, 200, 300.1. à 300.8, 500), et
- le dispositif de commande central (354) comprend au moins un module de commande central (360) configuré pour commander au moins le premier dispositif d'éclairage public (100, 200, 300.1. à 300.8, 500), sur la base du signal de capteur d'environnement reçu, et
- où le module de commande central (360) est configuré pour activer, en transmettant un signal de commande au module de commande local correspondant (219), deux ou plusieurs premiers dispositifs d'éclairage public qui sont situés à une distance prédéfinissable de l'emplacement du capteur d'environnement qui a mesuré la valeur du paramètre de concentration d'air.

2. Système d'éclairage public (350) selon la revendication 1, **caractérisé en ce que**
- le système d'éclairage public (100, 200, 300.1. à 300.8, 500) comprend au moins un dispositif de soufflage (246) configuré pour générer un flux d'air (120, 220) depuis l'ouverture d'entrée d'air (114, 214, 514) à travers le canal d'air (116, 216) jusqu'à l'ouverture de sortie d'air (112, 212, 512).

3. Système d'éclairage public (350) selon la revendication 1 ou 2, **caractérisé en ce que**
- l'au moins un ensemble de purification d'air (122, 222, 522) est un ensemble de filtrage de particules fines (122, 222, 522),
et/ou
- l'au moins un ensemble de purification d'air (122, 222, 522) est un ensemble de neutralisation des oxydes d'azote (122).

4. Système d'éclairage public (350) selon la revendication 3, **caractérisé en ce que**
- l'ensemble de filtrage de particules fines (122, 222, 522) comprend, en tant que module de purification d'air (118, 218, 518), au moins un électroséparateur (118, 218, 518), en particulier un électrofiltre à plaques (118, 218, 518).

5. Système d'éclairage public (350) selon la revendication 3 ou 4, **caractérisé en ce que**
- l'élément de support (102, 202) est un mât (102, 202) d'une longueur déterminée (224),
- où l'ensemble de filtrage de particules fines (122, 222, 522) s'étend sur au moins 50 % de la longueur (224) du mât (102, 202), de préférence sur au moins 65 % de la longueur (224) du mât (102, 202), en particulier de préférence sur au moins 75 % de la longueur (224) du mât (102, 202).

6. Système d'éclairage public (350) selon l'une des revendications précédentes, **caractérisé en ce que**
- le dispositif d'éclairage public (100, 200, 300.1. à 300.8, 500) comprend au moins un capteur de environnement (244) configuré pour détecter au moins un paramètre de concentration d'air, et
- au moins un module de commande local (219) du dispositif d'éclairage public (100, 200, 300.1. à 300.8, 500) est configuré pour commander l'ensemble de purification d'air (122, 222, 522) sur la base du au moins un paramètre de concentration d'air détecté,
- où l'au moins un capteur de environnement (244) est en particulier un capteur de particules fines (244) et/ou un capteur de dioxyde d'azote (244).

7. Système d'éclairage public (350) selon l'une des revendications précédentes, **caractérisé en ce que**
- le dispositif d'éclairage public (100, 200, 300.1. à 300.8, 500) comprend en outre au moins un module du groupe comprenant :
- un module de communication sans fil (234) configuré pour permettre une liaison de communication entre un terminal utilisateur situé à portée du module de communication sans fil (234) et un réseau (352),
- un module d'affichage (236) configuré pour afficher des informations,
- un module de détection de flux de mouvement, configuré pour détecter des flux de mouvement,
- un module de surveillance (242), configuré pour la surveillance optique de l'environnement du lieu d'installation du dispositif d'éclairage public (100, 200, 300.1. à 300.8, 500).

8. Système d'éclairage public (350) selon l'une des revendications précédentes, **caractérisé en ce que**
- le dispositif d'éclairage public (100, 200, 300.1. à 300.8, 500) comprend en outre un module de charge (238) configuré pour charger des véhicules électriques.

9. Système d'éclairage public (350) selon l'une des revendications précédentes, **caractérisé en ce que**
- le dispositif d'éclairage public (100, 200, 300.1. à 300.8, 500) comprend en outre un module de surveillance d'espace de stationnement (242) configuré pour surveiller l'espace de stationnement disponible dans la zone du lieu d'installation du dispositif d'éclairage public (100, 200, 300.1. à 300.8, 500).

10. Procédé pour exploiter un système d'éclairage public (350) selon l'une des revendications précédentes, comprenant :
- fournir un paramètre de concentration d'air détecté dans une première zone géographique (360, 370) par un capteur de environnement (244) situé au moins à une distance prédéfinissable d'au moins un premier dispositif d'éclairage public (100, 200, 300.1. à 300.8, 500), et
- contrôler, par un module de commande local et/ou un module de commande central, au moins un dispositif de purification d'air (122, 222, 522) d'au moins un dispositif d'éclairage public (100, 200, 300.1. à 300.8, 500) positionné dans la première zone géographique (360, 370).
